(19)

Europäisches Patentamt
European Patent Office
Office européen des brevets

(11) **EP 2 891 596 A1**

(12) **EUROPEAN PATENT APPLICATION**
published in accordance with Art. 153(4) EPC

(43) Date of publication:
08.07.2015 Bulletin 2015/28

(51) Int Cl.:
*B62K 17/00* (2006.01)     *B62K 3/00* (2006.01)

(21) Application number: 12883787.9

(22) Date of filing: 30.08.2012

(86) International application number:
PCT/JP2012/005504

(87) International publication number:
WO 2014/033789 (06.03.2014 Gazette 2014/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Toyota Jidosha Kabushiki Kaisha
Toyota-shi, Aichi 471-8571 (JP)

(72) Inventors:
• TAIRA, Tetsuya
  Toyota-shi
  Aichi 471-8571 (JP)
• BITOH, Hiroshi
  Toyota-shi
  Aichi 471-8571 (JP)

(74) Representative: TBK
Bavariaring 4-6
80336 München (DE)

(54) **SELF-BALANCING MOBILE BODY AND CONTROL METHOD FOR SAME**

(57)     An inverted vehicle according to the present invention includes a plurality of multiplexed control systems, and performs inversion control and thereby moves by providing torque to a wheel and thereby driving the wheel by using the plurality of control systems. The control systems include a switching detection unit that detects switching to inversion control in which at least one of the plurality of control systems is disabled, and an inversion control unit that performs inversion control of the inverted vehicle while restricting at least one of a speed and a posture angle of the inverted vehicle when the switching of the inversion control is detected by the switching detection unit.

Fig. 2

## Description

### Technical Field

The present invention relates to an inverted vehicle and its control method, and in particular to a technique for controlling an inverted vehicle that performs inversion control and thereby moves by providing torque to wheels and thereby driving the wheels by using a plurality of multiplexed control systems.

### Background Art

As a vehicle for carrying a person, a vehicle with two wheels such as those disclosed in Patent Literatures 1 and 2 has been examined. In such inverted two-wheeled vehicles, it is necessary to ensure the control stability.

### Citation List

### Patent Literature

Patent Literature 1: Published Japanese Translation of PCT International Publication for Patent Application, No. 2004-510637
Patent Literature 2: Published Japanese Translation of PCT International Publication for Patent Application, No. 2003-502002

## Summary of Invention

### Technical Problem

The control stability of some of such inverted two-wheeled vehicles is ensured by making their control systems redundant. However, when one of the redundant systems is disabled due to a failure of a component or the like in a two-wheeled vehicle and the control is performed by the other single system (one-side system), it is very difficult to ensure the control stability.
This is because when the control is performed by a single system, the drive currents for driving the motors that provide torque to the wheels can be supplied only by the one control system. Therefore, there is a problem that the torque that can be provided from the motors to the wheels is reduced, thus making it very difficult to ensure the control stability.
The present invention has been made in view of the above-described knowledge, and an object thereof is to provide an inverted vehicle that performs inversion control and thereby moves by providing torque to a wheel and thereby driving the wheel by using a plurality of multiplexed control systems and is able to improve the control stability, and its control method.

### Solution to Problem

An inverted vehicle according to a first aspect of the present invention is an inverted vehicle that includes a plurality of multiplexed control systems, and performs inversion control and thereby moves by providing torque to a wheel and thereby driving the wheel by using the plurality of control systems, in which the control systems include: a switching detection unit that detects switching to inversion control in which at least one of the plurality of control systems is disabled; and an inversion control unit that performs inversion control of the inverted vehicle while restricting at least one of a speed and a posture angle of the inverted vehicle when the switching of the inversion control is detected by the switching detection unit.
A control method according to a second aspect of the present invention is a control method for performing inversion control of an inverted vehicle and thereby moving the inverted vehicle by providing torque to a wheel and thereby driving the wheel by using a plurality of multiplexed control systems, including: a switching detection step of detecting switching to inversion control in which at least one of the plurality of control systems is disabled; and an inversion control step of performing inversion control of the inverted vehicle while restricting at least one of a speed and a posture angle of the inverted vehicle when the switching of the inversion control is detected.

**Advantageous Effects of Invention**

According to each of the above-described aspects of the present invention, it is possible to provide an inverted vehicle that performs inversion control and thereby moves by providing torque to a wheel and thereby driving the wheel by using a plurality of multiplexed control systems and is able to improve the control stability, and its control method.

**Brief Description of Drawings**

Fig. 1 shows a general configuration of an inverted two-wheeled vehicle according to a first exemplary embodiment of the present invention;
Fig. 2 is a block diagram showing a configuration of a control apparatus according to the first exemplary embodiment of the present invention;
Fig. 3 is a conceptual diagram of motor control according to the first exemplary embodiment of the present invention;

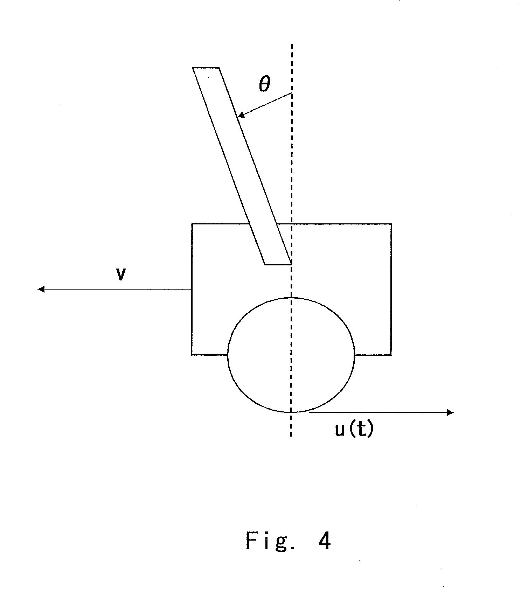

Fig. 4 shows an inverted pendulum for explaining an equation of motion;
Fig. 5 is a flowchart showing processes performed by a control apparatus according to the first exemplary embodiment of the present invention;
Fig. 6 is a block diagram showing a configuration of a control apparatus according to a second exemplary embodiment of the present invention; and
Fig. 7 is a block diagram showing a configuration of a control apparatus according to a third exemplary embodiment of the present invention.

**Description of Embodiments**

<First exemplary embodiment according to the invention>

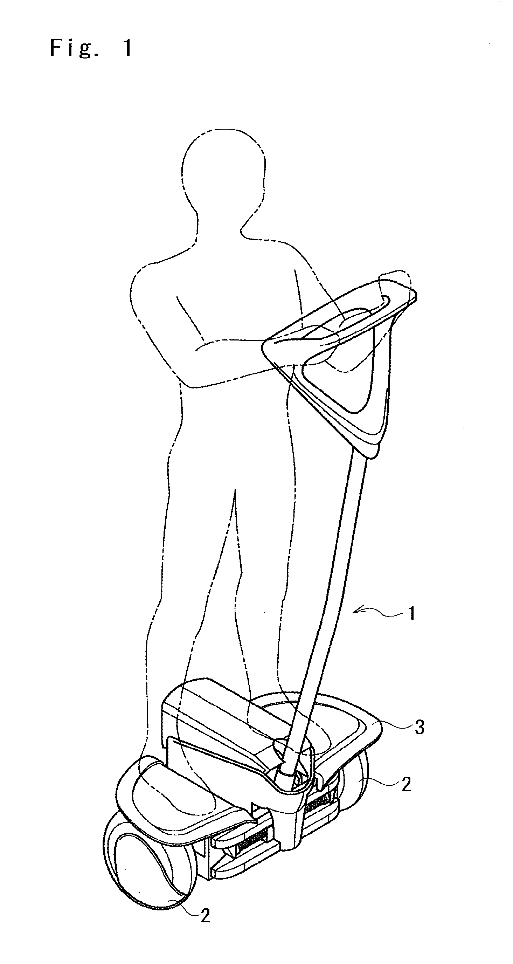

An inverted two-wheeled vehicle 1 according to a first exemplary embodiment of the present invention is explained with reference to Fig. 1. Fig. 1 shows a general configuration of the inverted two-wheeled vehicle 1 according to the first exemplary embodiment of the present invention.

The inverted two-wheeled vehicle 1 detects the posture angle of the inverted two-wheeled vehicle 1 in the front-back direction when a rider standing on step-plates 3 applies a load in the front-back direction of the inverted two-wheeled vehicle 1 by using a sensor(s), and controls motors that drive left and right wheels 2 based on this detection result so that the inverted state of the inverted two-wheeled vehicle 1 is maintained. That is, the inverted two-wheeled vehicle 1 controls the motors that drive the left and right wheels 2 in such a manner that, when the rider standing on the step-plates 3 applies a load forward and thereby inclines the inverted two-wheeled vehicle 1 forward, the inverted two-wheeled vehicle 1 accelerates forward so that the inverted state of the inverted two-wheeled vehicle 1 is maintained; and when the rider standing on the step plates 3 applies a load backward and thereby inclines the inverted two-wheeled vehicle 1 backward, the inverted two-wheeled vehicle 1 accelerates backward so that the inverted state of the inverted two-wheeled vehicle 1 is maintained. In the inverted two-wheeled vehicle 1, the control system for controlling the motors is configured in a redundant fashion in order to ensure the control stability.

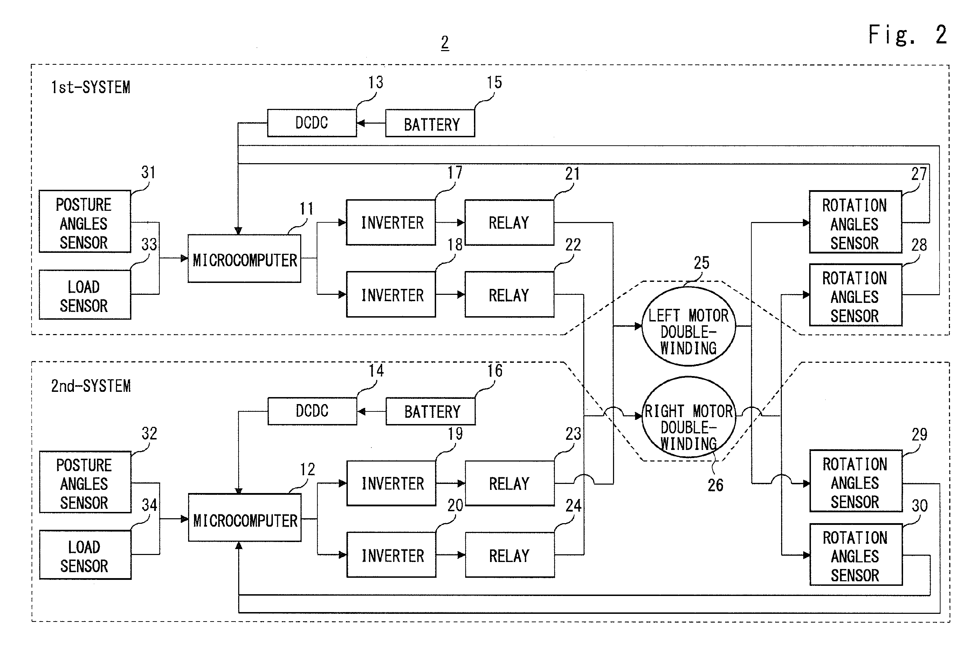

Note that the control of the motors is performed by a control apparatus mounted on the inverted two-wheeled vehicle 1. The control apparatus is described below with reference to Fig. 2.

Next, a configuration of a control apparatus 10 according to the first exemplary embodiment of the present invention is explained with reference to Fig. 2. Fig. 2 is a block diagram showing a configuration of the control apparatus 10 according to the first exemplary embodiment of the present invention.

The control apparatus 10 includes microcontrollers 11 and 12 (hereinafter also called "microcomputers"), DCDC converters (hereinafter also called "DCDCs") 13 and 14, batteries 15 and 16, inverters 17 to 20, relay circuits (hereinafter also called "relays") 21 to 24, motors 25 and 26, rotation angle sensors 27 to 30, posture angle sensors 31 and 32, and load sensors 33 and 34.

The control apparatus 10 is provided with redundant systems including a 1st-control system and a 2nd-control system in a redundant fashion in order to ensure control stability of the inverted two-wheeled vehicle 1. The 1st system includes the microcomputer 11, the DCDC converter 13, the battery 15, the inverters 17 and 18, the relays 21 and 22, the rotation angle sensors 27 and 28, the posture angle sensor 31, and the load sensor 33. The 2nd-system includes the microcomputer 12, the DCDC converter 14, the battery 16, the inverters 19 and 20, the relays 23 and 24, the rotation angle sensors 29 and 30, the posture angle sensor 32, and the load sensor 34.

Each of the microcomputers 11 and 12 is an ECU (Engine Control Unit) that controls the motors 25 and 26 based on a posture signal output from the posture angle sensor 31 or 32 so that the inverted state is maintained as described previously. Each of the microcomputers 11 and 12 includes a CPU (Central Processing Unit) and a storage unit, and carries out processes for a respective one of the microcomputers 11 and 12 according to this exemplary embodiment by executing a program(s) stored in the storage unit. That is, the program(s) stored in the storage unit of each of the microcomputers 11 and 12 includes a code for causing the CPU to execute processes for a respective one of the microcomputers 11 and 12 according to this exemplary embodiment. Note that the storage unit includes, for example, an arbitrary storage device capable of storing the aforementioned program and various information items used for processes executed in the CPU. The storage device may be, for example, a memory or the like.

The microcomputer 11 outputs a command value for controlling the motor 25 to the inverter 17. Further, the microcomputer 11 outputs a command value for controlling the motor 26 to the inverter 18. The microcomputer 12 outputs a command value for controlling the motor 25 to the inverter 19. Further, the microcomputer 12 outputs a command value for controlling the motor 26 to the inverter 20.

Note that the microcomputer 11 generates a command value for the inverter 17 based on a rotation angle signal indicating the rotation angle of the motor 25 output from the rotation angle sensor 27 so that feedback control is performed for the motor 25. Further, the microcomputer 11 generates a command value for the inverter 18 based on a rotation angle signal indicating the rotation angle of the motor 26 output from the rotation angle sensor 28 so that feedback control is performed for the motor 26. The microcomputer 12 generates a command value for the inverter 19 based on a rotation angle signal indicating the rotation angle of the motor 25 output from the rotation angle sensor 29 so that feedback control is performed for the motor 25. Further, the microcomputer 12 generates a command value for the inverter 20 based on a rotation angle signal indicating the rotation angle of the motor 26 output from the rotation angle sensor 30 so that feedback control is performed for the motor 26.

Note that the microcomputer 11 operates by electric power supplied from DCDC 13. Further, the microcomputer 12 operates by electric power supplied from DCDC 14.

The DCDC 13 converts the voltage of electric power supplied from the battery 15 into a voltage suitable for the supply to the microcomputer 11 and then supplies the electric power to the microcomputer 11. The DCDC 14 converts the voltage of electric power supplied from the battery 16 into a voltage suitable for the supply to the microcomputer 12 and then supplies the electric power to the microcomputer 12.

Each of the batteries 15 and 16 supplies electric power necessary for the operation of the control apparatus 10 to the control apparatus 10. Specifically, the battery 15 supplies electric power necessary for the operation of the microcomputer 11 to the DCDC 13. Further, the battery 16 supplies electric power necessary for the operation of the microcomputer 12 to the DCDC 14.

The inverter 17 performs PWM (Pulse Width Modulation) control based on a command value output from the microcomputer 11, and thereby generates a drive current for driving the motor 25 from the electric power supplied from the battery 15 and supplies the generated electric power to the motor 25 through the relay 21. The inverter 18 performs PWM control based on the command value output from the microcomputer 11, and thereby generates a drive current for driving the motor 26 from the electric power supplied from the battery 15 and supplies the generated electric power to the motor 26 through the relay 22. The inverter 19 performs PWM control based on a command value output from the microcomputer 12, and thereby generates a drive current for driving the motor 25 from the electric power supplied from the battery 16 and supplies the generated electric power to the motor 25 through the relay 23. The inverter 20 performs PWM control based on the command value output from the microcomputer 12, and thereby generates a drive current for driving the motor 26 from the electric power supplied from the battery 16 and supplies the generated electric power to the motor 26 through the relay 24.

The relay 21 separates the inverter 17 from the motor 25 under the control of the microcomputer 11, which is performed in response to detection of a failure in a component of the 1st-sytem detected by the microcomputer 11. The relay 22 separates the inverter 18 from the motor 26 under the control of the microcomputer 11, which is performed in response to a failure in a component of the 1st-sytem detected by the microcomputer 11. The relay 23 separates the inverter 19 from the motor 25 under the control of the microcomputer 12, which is performed in response to a failure in a component of the 2nd-sytem detected by the microcomputer 12. The relay 24 separates the inverter 20 from the motor 26 under the control of the microcomputer 12, which is performed in response to a failure in a component of the 2nd-sytem detected by the microcomputer 12. By separating a control system in which a failure has occurred from the motors 25 and 26 as described above, erroneous control is prevented and safety in the control is ensured.

Each of the motors 25 and 26 is a double-winding motor. The motor 25 is driven by a drive current supplied from the inverter 17 through the relay 21 and a drive current supplied from the inverter 19 through the relay 23. By driving the motor 25, the left wheel 2 of the inverted two-wheeled vehicle 1 rotates. The motor 26 is driven by a drive current supplied from the inverter 18 through the relay 22 and a drive current supplied from the inverter 20 through the relay 24. By driving the motor 26, the right wheel 2 of the inverted two-wheeled vehicle 1 rotates.

The rotation angle sensor 27 detects the rotation angle of the motor 25, generates a rotation angle signal indicating the detected rotation angle, and outputs the generated rotation angle signal to the microcomputer 11. The rotation angle sensor 28 detects the rotation angle of the motor 26, generates a rotation angle signal indicating the detected rotation angle, and outputs the generated rotation angle signal to the microcomputer 11. The rotation angle sensor 29 detects the rotation angle of the motor 25, generates a rotation angle signal indicating the detected rotation angle, and outputs the generated rotation angle signal to the microcomputer 11. The rotation angle sensor 30 detects the rotation angle of the motor 26, generates a rotation angle signal indicating the detected rotation angle, and outputs the generated rotation angle signal to the microcomputer 11.

Each of the posture angle sensors 31 and 32 detects the posture angle of the inverted two-wheeled vehicle 1 in the front-back direction when a rider applies a load onto the step-plates 3 in the front-back direction of the inverted two-wheeled vehicle 1, and outputs a posture angle signal indicating the detected posture angle to a respective one of the microcomputers 11 and 12. Each of the posture angle sensors 31 and 32 is configured to detect the posture angle of the inverted two-wheeled vehicle 1 by using, for example, an acceleration sensor and a gyro sensor.

Each of the load sensors 33 and 34 detects a load exerted onto the step-plates 3 from the rider and outputs a load signal indicating the detected load to a respective one of the microcomputers 11 and 12.

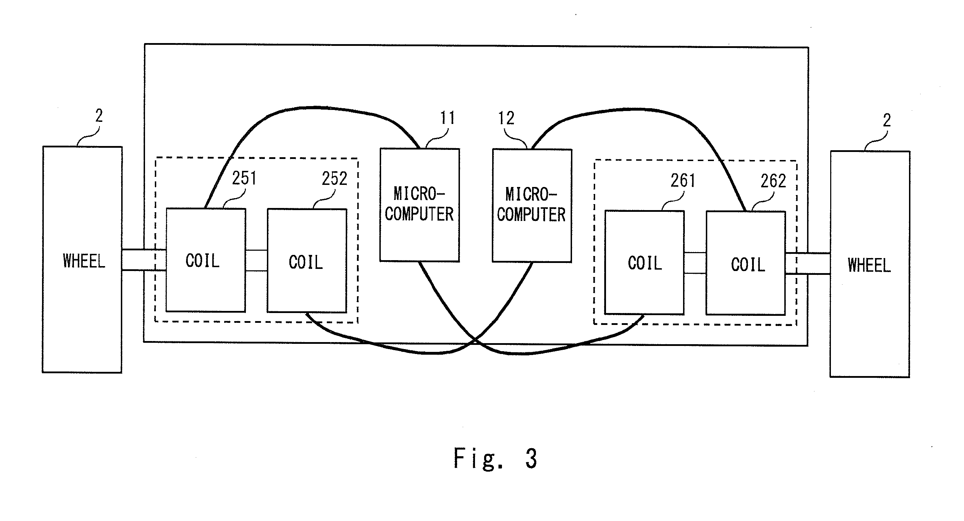

A method for improving the control stability according to the first exemplary embodiment of the present invention is explained hereinafter with reference to Fig. 3. Fig. 3 is a conceptual diagram of motor control according to the first exemplary embodiment of the present invention.

Each of the motors 25 and 26 is a double-winding motor as described above. Specifically, the motor 25 has a double-winding structure consisting of coils 251 and 252, and the motor 26 has a double-winding structure consisting of coils 261 and 262. The motor 25 is driven by a drive current supplied from the microcomputer 11 to the coil 251 through the relay 21 and a drive current supplied from the microcomputer 12 to the coil 252 through the relay 23. The motor 26 is driven by a drive current supplied from the microcomputer 11 to the coil 261 through the relay 22 and a drive current supplied from the microcomputer 12 to the coil 262 through the relay 24.

As described above, when the inverted two-wheeled vehicle 1 is operated by the redundant systems, the motors 25 and 26 can be driven by supplying the drive currents from the two control systems. Therefore, it is possible to drive the wheels of the inverted two-wheeled vehicle 1 by providing large torque from the motors 25 and 26 to the wheels. In contrast to this, when one of the control systems is disabled and hence the inverted two-wheeled vehicle 1 is driven by a single control system, the motors 25 and 26 are driven by supplying a drive current only from the one control system. Therefore, the motors 25 and 26 are driven so that the torque that can be provided is only half of the torque provided when the inverted two-wheeled vehicle 1 is operated by the redundant systems.

Further, equations of motion for an inverted two-wheeled vehicle are shown below as Expressions (1) and (2). Strictly speaking, Expressions (1) and (2) are equations of motion for an inverted pendulum. However, they are considered to be substantially similar to equations of motion for an inverted two-wheeled vehicle. Since Expressions (1) and (2) are typical equations for an inverted pendulum, explanations for the method for deriving these expressions are omitted here. Expression (1) is an equation of motion indicating the acceleration of the inverted two-wheeled vehicle, and Expression (2) is an equation of motion indicating the angular acceleration of the posture angle of the inverted two-wheeled vehicle. The variable "v" represents the speed of the inverted two-wheeled vehicle. The variable "θ" represents the posture angle. The function "u(t)" represents the torque. The parameter "D" represents a friction coefficient. The parameter "m" represents the mass (weight) of the pendulum (rider). The parameter "mc" represents the mass of the inverted two-wheeled vehicle. The symbol "M" represents a value expressed as "4mc+m". The parameter "g" represents the gravitational acceleration. Further, the parameter "1" represents a length from the center of gravity of the pendulum (rider).

[Expression 1]

$$\dot{v} = -\frac{4D}{M}v - \frac{3mg}{l}\theta + \frac{3}{m}u(t) \quad \cdots \quad (1)$$

[Expression 2]

$$\dot{\omega} = \frac{3D}{Ml}v + \frac{3(m_c + m)g}{Ml}\theta - \frac{3}{Ml}u(t) \quad \cdots \quad (2)$$

As can be understood from these equations of motion, when the weight of the rider increases, the torque necessary for maintaining the inverted state increases. Therefore, a risk that the control becomes unstable due to a torque shortage increases when the load applied or exerted from the rider onto the step-plates 3 is large under the condition that the inverted two-wheeled vehicle is operated by a single system.

Further, as can be understood from these equations of motion, the larger the posture angle θ becomes, the greater the torque necessary for maintaining the inverted state (what is called "physical characteristic"). Further, the higher the speed v becomes, the greater the torque necessary for maintaining the inverted state (what is called "effect of viscosity"). Therefore, it is possible to reduce the torque necessary for maintaining the inverted state by restricting at least one of the posture angle θ and the speed v.

Accordingly, in the first exemplary embodiment, when the inverted two-wheeled vehicle is operated by a single system and it is determined that the load exerted from the rider (including the weight of a baggage possessed by the rider) is heavy based on the load signal output from each of the load sensors 33 and 34, each of the microcomputers 11 and 12 determines that there is a possibility that a shortage of the torque for driving the wheels 2 could occur. Then, in this case, each of the microcomputers 11 and 12 performs the inversion control of the inverted two-wheeled vehicle 1 while restricting at least one of the speed and the posture angle of the inverted two-wheeled vehicle 1, and thereby reduces the torque necessary for maintaining the inverted state. By doing so, each of the microcomputers 11 and 12 ensures the control stability of the inverted two-wheeled vehicle 1. Processes for these operations are described hereinafter.

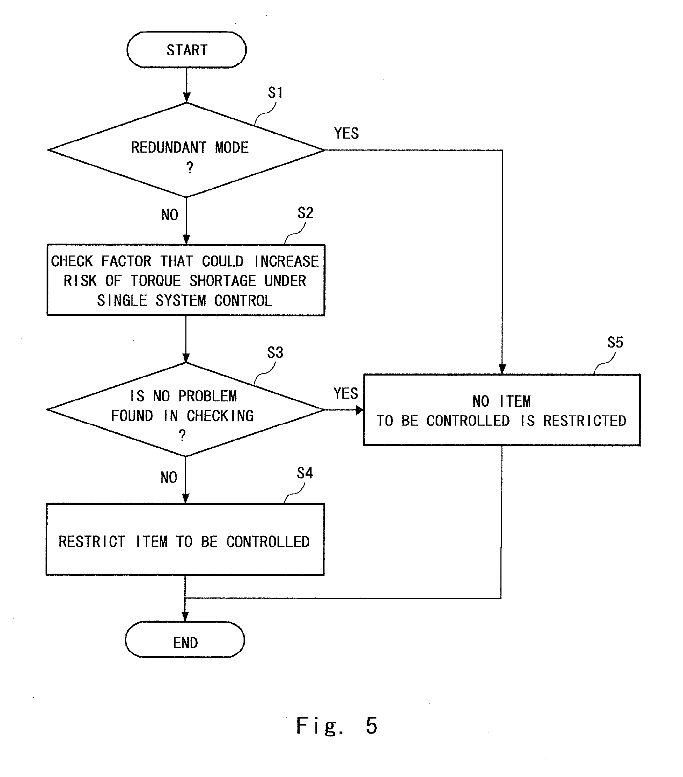

Next, processes performed by the control apparatus 10 according to the first exemplary embodiment of the present invention are explained hereinafter with reference to Fig. 5. Fig. 5 is a flowchart showing processes performed by the control apparatus 10 according to the first exemplary embodiment of the present invention.

The microcomputers 11 and 12 determine whether or not the inverted two-wheeled vehicle is in the redundant system mode in which neither of the 1-st and 2-nd control systems is disabled (S1). Specifically, when the microcomputer 11 or 12 detects an abnormality in its own control system (such as a failure of a component included in its own control system), it disables its own system and outputs information indicating the disabled condition to the microcomputer (microcomputer 11 or 12) of the other control system. When the microcomputer (microcomputer 11 or 12) receives this information, it determines that the other control system is disabled and hence the inverted two-wheeled vehicle is not operating in the redundant system mode (i.e., the inverted two-wheeled vehicle is operating in a single system mode) (S1: No). When the microcomputer (microcomputer 11 or 12) does not receive this information, it determines that the inverted two-wheeled vehicle is operating in the redundant system mode (S1: Yes).

Note that as described previously, when the microcomputer 11 or 12 disables its own control system, it separates the inverter included in its own control system (inverters 17 and 18 or inverters 19 and 20) from the motors 25 and 26 by switching the relays included in its own control system (relays 21 and 22 or relays 23 and 24). By separating the faulty control system from the motors 25 and 26 in this manner, erroneous control is prevented and the safety in the control is ensured.

An example case where the microcomputer 11, which belongs to the 1st-system, detects an abnormality in its own control system, and disables the 1st-control system and notifies the microcomputer 12 of the disabled condition is shown hereinafter. That is, an example case where the microcomputer 12 determines that the inverted two-wheeled vehicle is not operating in the redundant system mode is shown. Needless to say, processes similar to the below-described processes can be performed by the microcomputer 11 when the microcomputer 12 detects an abnormality in the 2nd-control system and disables the 2nd-control system.

When the microcomputer 12 determines that the inverted two-wheeled vehicle is not operating in the redundant system mode, the microcomputer 12 checks (or examines) factors that could increase the risk of a torque shortage under the condition of the single system (S2). Specifically, in the first exemplary embodiment, the microcomputer 12 determines whether the load exerted on the step-plates 3 is larger than a predetermined threshold (load) or not based a load signal output from the load sensor 34. That is, the microcomputer 12 determines whether the load indicated by the load signal is larger than the predetermined threshold (load) or not. Then, when the microcomputer 12 determines that the load indicated by the load signal is larger than the predetermined threshold, the microcomputer 12 determines that a problem is found in the checking process (S3: No). On the other hand, when the microcomputer 12 determines that the load indicated by the load signal is equal to or smaller than the predetermined threshold, the microcomputer 12 determines that no problem is found in the checking process (S3: Yes).

When the microcomputer 12 determines that there is a problem in the checking process in the step S2 (S3: No), the microcomputer 12 restricts an item(s) to be controlled of the inverted two-wheeled vehicle 1 so that the torque necessary for maintaining the inverted state is reduced. Specifically, the item(s) to be controlled of the inverted two-wheeled vehicle 1 is restricted by using at least one of the following Restriction methods (1) and (2).

(1) To restrict the speed of the inverted two-wheeled vehicle 1; and
(2) To restrict the permissible posture angle of the inverted two-wheeled vehicle 1.

This is because, as explained above with reference to Expressions (1) and (2), the torque necessary for maintaining the inverted state can be reduced by restricting at least one of the posture angle θ and the speed v of the inverted two-wheeled vehicle 1.

Firstly, the Restriction method (1) is explained. In the Restriction method (1), the microcomputer 12 determines the upper limit value for the speed of the inverted two-wheeled vehicle 1 according to the load indicated by the load signal so that no shortage of the torque for driving the wheels 2 occurs. Note that as described previously, the torque necessary for the inversion control increases as the load for the inverted two-wheeled vehicle 1 increases. However, the torque necessary for the inversion control can be reduced by lowering the speed of the inverted two-wheeled vehicle 1. Therefore, the microcomputer 12 determines the upper limit value for the speed in such a manner that the upper limit value decreases as the load increases. Note that the upper limit value for the speed of the inverted two-wheeled vehicle 1, which is determined according to the magnitude of the load, may be determined by, for example, the following manner: information representing a table that can make it possible to determine an upper limit value for the speed suitable for a load based on the magnitude of that load, a calculating formula that can make it possible to calculate an upper limit value for the speed suitable for a load based on the magnitude of that load, or the like is stored into a storage unit of each of the microcomputer 12 in advance; and then the CPU of the microcomputer 12 refers to that information. Then, the microcomputer 12 performs the inversion control of the inverted two-wheeled vehicle 1 so that the speed of the inverted two-wheeled vehicle 1 becomes equal to or lower than the determined upper limit value.

The following explanation is given on the assumption that, for example, when the posture angle of the inverted two-wheeled vehicle 1, which is caused by the rider, is determined to be a given posture angle Θ in the redundant system mode, the microcomputers 11 and 12 of the two control systems supply drive currents to the motors 25 and 26 so that the speed of the inverted two-wheeled vehicle 1 becomes 2V. Further, it is explained on the assumption that the upper limit value for the speed of the inverted two-wheeled vehicle 1 has been determined to be V based on the load exerted on the inverted two-wheeled vehicle 1 by the rider.

In this case, even if it is possible to supply drive currents to the motors 25 and 26 so that the speed of the inverted two-wheeled vehicle 1 becomes 2V even when the posture angle of the inverted two-wheeled vehicle 1, which is caused by the rider, is determined to be the angle Θ in the single system mode, the drive currents supplied to the motors 25 and 26 are limited so that the speed of the inverted two-wheeled vehicle 1 is restricted to or below the upper limit value V. In other words, the microcomputer 12 adjusts the command values output to the inverters 17 and 18 so that the speed of the inverted two-wheeled vehicle 1 is restricted to or below the upper limit value V by the drive currents supplied from the inverters 17 and 18 to the motors 25 and 26. That is, when the microcomputer 12 determines that the speed of the inverted two-wheeled vehicle 1 calculated from the rotation angles indicated by the rotation angle signals output from the rotation sensors 29 and 30, respectively, exceeds the upper limit value V, the microcomputer 12 reduces the acceleration of the inverted two-wheeled vehicle 1 by reducing the drive currents supplied to the motors 25 and 26 so that the speed of the inverted two-wheeled vehicle 1 is kept equal to or lower than the upper limit value V.

Next, the Restriction method (2) is explained. In the Restriction method (2), the microcomputer 12 determines the upper limit value for the posture angle of the inverted two-wheeled vehicle 1 according to the load indicated by the load signal so that no shortage of the torque for driving the wheels 2 occurs. Note that as described previously, the torque necessary for the inversion control increases as the load for the inverted two-wheeled vehicle 1 increases. However, the torque necessary for the inversion control can be reduced by lowering the posture angle of the inverted two-wheeled vehicle 1. Therefore, the microcomputer 12 determines the upper limit value for the posture angle in such a manner that the upper limit value decreases as the load increases. Note that the upper limit value for the posture angle of the inverted two-wheeled vehicle 1, which is determined according to the magnitude of the load, may be determined by, for example, the following manner: information representing a table that can make it possible to determine an upper limit value for the posture angle suitable for a load based on the magnitude of that load, a calculating formula that can make it possible to calculate an upper limit value for the posture angle suitable for a load based on the magnitude of that load, or the like is stored into a storage unit of each of the microcomputer 12 in advance; and then the CPU of the microcomputer 12 refers to that information. Then, the microcomputer 12 performs the inversion control of the inverted two-wheeled vehicle 1 so that the posture angle of the inverted two-wheeled vehicle 1 becomes equal to or lower than the determined upper limit value.

The following explanation is given on the assumption that, for example, the upper limit value for the posture angle of the inverted two-wheeled vehicle 1 has been determined to be the angle Θ based on the load exerted on the inverted two-wheeled vehicle 1 by the rider. In this case, the drive currents supplied to the motors 25 and 26 are limited so that the posture angle of the inverted two-wheeled vehicle 1 is restricted to or below the upper limit value Θ. In other words, the microcomputer 12 adjusts the command values output to the inverters 17 and 18 so that the posture angle of the inverted two-wheeled vehicle 1 is restricted to or below the upper limit value Θ by the drive currents supplied from the inverters 17 and 18 to the motors 25 and 26,. That is, when the microcomputer 12 determines that the posture angle indicated by the posture angle signal output from the posture angle sensor 31 exceeds the upper limit value Θ, the microcomputer 12 accelerates the inverted two-wheeled vehicle 1 by increasing the drive currents supplied to the motors 25 and 26 so that the posture angle of the inverted two-wheeled vehicle 1 is kept equal to or smaller than the upper limit value Θ.

By restricting the item to be controlled of the inverted two-wheeled vehicle 1 as described above, even when the inverted two-wheeled vehicle 1 is in the single system mode and the load exerted from the rider is heavy, it is possible to prevent the occurrence of a torque shortage and thereby ensure the stability under the control of the non-disabled control system alone. For example, even when the inverted two-wheeled vehicle 1 is traveling with a heavy rider riding thereon in a single system mode and a brake is suddenly applied, the inverted two-wheeled vehicle 1 can be stably controlled.

On the other hand, when the microcomputer 12 determines that there is no problem in the checking process in the step S2 (S3: Yes), the microcomputer 12 does not restrict any of the items to be controlled of the inverted two-wheeled vehicle 1.

As explained above, in the first exemplary embodiment, the inverted two-wheeled vehicle 1 detects switching to inversion control in which one of the control systems is disabled. Then, when the inverted two-wheeled vehicle 1 detects the switching of the inversion control, the inverted two-wheeled vehicle 1 performs the inversion control of the inverted two-wheeled vehicle 1 while restricting at least one of the speed and the posture angle of the inverted two-wheeled vehicle 1. As a result, even when one of the control systems is disabled and the torque that can be provided to the wheels 2 of the inverted two-wheeled vehicle 1 is lowered, the torque necessary for driving the wheels 2 can also be reduced. Therefore, it is possible to improve the control stability of the inverted two-wheeled vehicle 1.

Further, in the first exemplary embodiment, the load exerted from a rider riding on the inverted two-wheeled vehicle 1 is detected by using the load sensor. Then, when the detected load is larger than a predetermined threshold, the inverted two-wheeled vehicle 1 determines that there is a possibility that a shortage of the torque for driving the wheels 2 could occur. Therefore, the inverted two-wheeled vehicle 1 performs the inversion control of the inverted two-wheeled vehicle 1 so that at least one of the speed and the posture angle of the inverted two-wheeled vehicle 1 is restricted. As a result, the inverted two-wheeled vehicle 1 can reduce the increase of the torque necessary for driving the wheels 2 even when the load exerted from a rider riding on the inverted two-wheeled vehicle 1 is large. Therefore, it is possible to improve the control stability of the inverted two-wheeled vehicle 1.

<Second exemplary embodiment according to the invention>

Next, an inverted two-wheeled vehicle 1 according to a second exemplary embodiment of the present invention is explained. Note that the general configuration of the inverted two-wheeled vehicle 1 according to the second exemplary embodiment of the present invention is similar to that of the inverted two-wheeled vehicle 1 according to the first exemplary embodiment, which is explained above with reference to Fig. 1, and therefore its explanation is omitted.

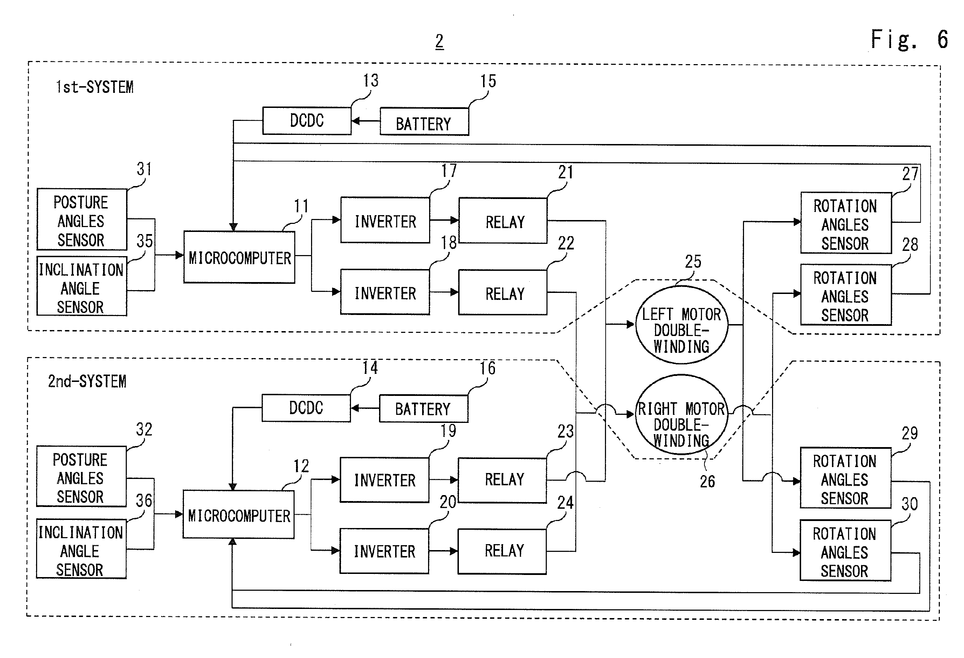

A configuration of a control apparatus 10 according to the second exemplary embodiment of the present invention is explained with reference to Fig. 6. Fig. 6 is a block diagram showing a configuration of the control apparatus 10 according to the second exemplary embodiment of the present invention.

The control apparatus 10 according to the second exemplary embodiment includes inclination angle sensors 35 and 36. The inclination angle sensor 35 is included in the 1st-sytem and the inclination angle sensor 36 is included in the 2nd-sytem.

Each of the inclination angle sensors 35 and 36 detects the inclination angle of the surface on which the inverted two-wheeled vehicle 1 is traveling (e.g., road surface) with respect to the front-back direction of the inverted two-wheeled vehicle 1, and outputs an inclination angle signal indicating the detected inclination angle to a respective one of the microcomputers 11 and 12. Each of the inclination angle sensors 35 and 36 is configured to detect the inclination angle of the surface on which the inverted two-wheeled vehicle 1 is traveling by using, for example, an acceleration sensor.

Note that it has been known that when the inverted two-wheeled vehicle 1 travels on an inclined surface, the torque necessary for maintaining the inverted state increases. However, when the inverted two-wheeled vehicle is operated in a single system, the torque that can be provided to the wheels 2 is reduced by half as described previously. Therefore, when the inclination angle of the surface on which the inverted two-wheeled vehicle 1 is traveling is large while the inverted two-wheeled vehicle is operated by the single system, a risk that the control becomes unstable due to a torque shortage increases.

Therefore, in the second exemplary embodiment, when the inverted two-wheeled vehicle 1 is operated by a single system and it is determined that the inclination angle of the surface on which the inverted two-wheeled vehicle 1 is traveling is large based on an inclination angle signal output from each of the inclination angle sensors 35 and 36, each of the microcomputers 11 and 12 determines that there is a possibility that a shortage of the torque for driving the wheels 2 could occur. Then, in this case, each of the microcomputers 11 and 12 performs the inversion control of the inverted two-wheeled vehicle 1 while restricting at least one of the speed and the posture angle, and thereby reduces the torque necessary for maintaining the inverted state. By doing so, each of the microcomputers 11 and 12 ensures the control stability of the inverted two-wheeled vehicle 1. Processes for these operations are described hereinafter.

Next, processes performed by the control apparatus 10 according to the second exemplary embodiment of the present invention are explained. Note that when the processes performed by the control apparatus 10 according to the second exemplary embodiment are compared with those performed by the control apparatus 10 according to the first exemplary embodiment, which are explained above with reference to Fig. 5, the factor(s) checked in the step S2 is different from that in the first exemplary embodiment. That is, in the second exemplary embodiment, as the factor that could increase the risk of a torque shortage under the condition of the single system, the inclination angle of the surface on which the inverted two-wheeled vehicle 1 is traveling is checked. Further, in the second exemplary embodiment, the upper limit value(s) for restricting the item(s) to be controlled of the inverted two-wheeled vehicle 1 is determined according to the inclination angle of the surface on which the inverted two-wheeled vehicle 1 is traveling. Explanations of the other processes, which are similar to those of the first exemplary embodiment, are omitted.

The following explanation is given on the assumption that the 1st-control system has been disabled as in the case of the explanation of the first exemplary embodiment. Needless to say, processes similar to the below-described processes can be performed by the microcomputer 11 when the 2nd-control system is disabled.

In this case, in the second exemplary embodiment, the microcomputer 12 determines whether the inclination angle of the surface on which the inverted two-wheeled vehicle 1 is traveling is larger than a predetermined threshold (inclination angle) or not based on an inclination angle signal output from the inclination angle sensor 36 (S2). That is, the microcomputer 12 determines whether the inclination angle indicated by the inclination angle signal is larger than the predetermined threshold (inclination angle) or not. Then, when the microcomputer 12 determines that the inclination angle of the surface on which the inverted two-wheeled vehicle 1 is traveling is larger than the predetermined threshold, the microcomputer 12 determines that a problem is found in the checking process (S3: No). On the other hand, when the microcomputer 12 determines that the inclination angle of the surface on which the inverted two-wheeled vehicle 1 is traveling is equal to or smaller than the predetermined threshold, the microcomputer 12 determines that no problem is found in the checking process (S3: Yes).

When the microcomputer 12 determines that there is a problem in the checking process in the step S2 (S3: No), the microcomputer 12 restricts the operation of the inverted two-wheeled vehicle 1 by using at least one of the above-described operation restraint methods (1) and (2) so that the torque necessary for maintaining the inverted state is reduced (S4). However, in the second exemplary embodiment, the upper limit value for the speed or the posture angle of the inverted two-wheeled vehicle 1 is determined according to the inclination angle indicated by the inclination angle signal.

That is, in the Restriction method (1), the microcomputer 12 determines the upper limit value for the speed of the inverted two-wheeled vehicle 1 according to the inclination angle indicated by the inclination angle signal so that no shortage of the torque for driving the wheels 2 occurs. Note that as described previously, the torque necessary for the inversion control increases as the inclination angle of the surface on which the inverted two-wheeled vehicle 1 is traveling increases. However, the torque necessary for the inversion control can be reduced by lowering the speed of the inverted two-wheeled vehicle 1. Therefore, the microcomputer 12 determines the upper limit value for the speed in such a manner that the upper limit value decreases as the inclination angle increases. Note that the upper limit value for the speed of the inverted two-wheeled vehicle 1, which is determined according to the magnitude of the inclination angle, may be determined by, for example, the following manner: information representing a table that can make it possible to determine an upper limit value for the speed suitable for an inclination angle based on the magnitude of that inclination angle, a calculating formula that can make it possible to calculate an upper limit value for the speed suitable for an inclination angle based on the magnitude of that inclination angle, or the like is stored into a storage unit of each of the microcomputer 12 in advance; and then the CPU of the microcomputer 12 refers to that information. Then, the microcomputer 12 performs the inversion control of the inverted two-wheeled vehicle 1 so that the speed of the inverted two-wheeled vehicle 1 becomes equal to or lower than the determined upper limit value.

Further, in the Restriction method (2), the microcomputer 12 determines the upper limit value for the posture angle of the inverted two-wheeled vehicle 1 according to the inclination angle indicated by the inclination angle signal so that no shortage of the torque for driving the wheels 2 occurs. Note that as described previously, the torque necessary for the inversion control increases as the inclination angle with respect to the inverted two-wheeled vehicle 1 increases. However, the torque necessary for the inversion control can be reduced by reducing the posture angle of the inverted two-wheeled vehicle 1. Therefore, the microcomputer 12 determines the upper limit value for the posture angle of the inverted two-wheeled vehicle 1 in such a manner that the upper limit value decreases as the inclination angle increases. Note that the upper limit value for the posture angle of the inverted two-wheeled vehicle 1, which is determined according to the magnitude of the inclination angle, may be determined by, for example, the following manner: information representing a table that can make it possible to determine an upper limit value for the posture angle suitable for an inclination angle based on the magnitude of that inclination angle, a calculating formula that can make it possible to calculate an upper limit value for the posture angle suitable for an inclination angle based on the magnitude of that inclination angle, or the like is stored into a storage unit of each of the microcomputer 12 in advance; and then the CPU of the microcomputer 12 refers to that information. Then, the microcomputer 12 performs the inversion control of the inverted two-wheeled vehicle 1 so that the posture angle of the inverted two-wheeled vehicle 1 becomes equal to or lower than the determined upper limit value.

By restricting the item to be controlled of the inverted two-wheeled vehicle 1 as described above, even when the inverted two-wheeled vehicle is in the single system mode and the inclination angle of the surface on which the inverted two-wheeled vehicle 1 is traveling is large, it is possible to prevent the occurrence of a torque shortage and thereby ensure the stability under the control of the non-disabled control system alone. For example, even when a brake is suddenly applied while the inverted two-wheeled vehicle 1 is traveling on a steep downhill in a single system mode, or the inverted two-wheeled vehicle 1 is suddenly accelerated while the inverted two-wheeled vehicle 1 is traveling on a steep uphill in a single system mode, the inverted two-wheeled vehicle 1 can be stably controlled.

As explained above, in the second exemplary embodiment, the inverted two-wheeled vehicle 1 detects the inclination angle of the surface on which the inverted two-wheeled vehicle 1 is moving (the surface on which the inverted two-wheeled vehicle 1 is traveling) by using the inclination angle sensor. Then, when the detected inclination angle is larger than a predetermined threshold, the inverted two-wheeled vehicle 1 determines that there is a possibility that a shortage of the torque for driving the wheels 2 could occur. Therefore, the inverted two-wheeled vehicle 1 performs the inversion control of the inverted two-wheeled vehicle 1 so that at least one of the speed and the posture angle of the inverted two-wheeled vehicle 1 is restricted. As a result, the inverted two-wheeled vehicle 1 can reduce (or prevent) the increase of the torque necessary for driving the wheels 2 even when the inclination angle of the surface on which the inverted two-wheeled vehicle 1 is moving is large. Therefore, it is possible to improve the control stability of the inverted two-wheeled vehicle 1.

<Third exemplary embodiment according to the invention>

Next, an inverted two-wheeled vehicle 1 according to a third exemplary embodiment of the present invention is explained. Note that the general configuration of the inverted two-wheeled vehicle 1 according to the third exemplary embodiment of the present invention is similar to that of the inverted two-wheeled vehicle 1 according to the first exemplary embodiment, which is explained above with reference to Fig. 1, and therefore its explanation is omitted.

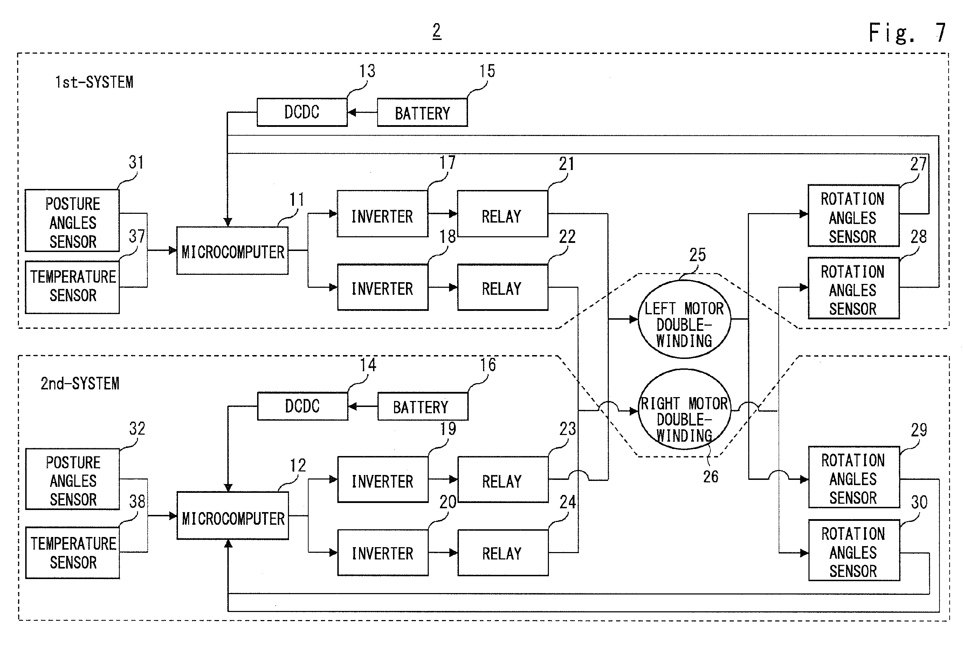

A configuration of a control apparatus 10 according to the third exemplary embodiment of the present invention is explained with reference to Fig. 7. Fig. 7 is a block diagram showing a configuration of the control apparatus 10 according to the third exemplary embodiment of the present invention.

The control apparatus 10 according to the third exemplary embodiment includes temperature sensors 37 and 38. The temperature sensor sensor 37 is included in the 1st-system and the temperature sensor 38 is included in the 2nd-sytem.

The temperature sensors 37 and 38 detect the temperatures of the batteries 15 and 16, respectively, and output temperature signals indicating the detected temperatures to the microcomputers 11 and 12, respectively.

Note that it has been known that the output of a battery decreases as its temperature decreases. That is, when the temperatures of the batteries 15 and 16 decrease, the drive currents, which are generated from the output currents of the batteries 15 and 16 in the inverters 17 and 18, also decrease. Therefore, the torque that can be provided to the wheels 2 is also lowered. However, when the inverted two-wheeled vehicle is operated in a single system, the torque that can be provided to the wheels 2 is reduced by half as described previously. Therefore, when the temperatures of the batteries decrease while the inverted two-wheeled vehicle is operated by the single system, a risk that the control becomes unstable due to a torque shortage increases.

Therefore, in the third exemplary embodiment, when the inverted two-wheeled vehicle is operated by a single system and it is determined that the temperature of each of the batteries 15 and 16 is low based on a temperature signal output from a respective one of the temperature sensors 37 and 38, each of the microcomputers 11 and 12 determines that there is a possibility that a shortage of the torque for driving the wheels 2 could occur. Then, in this case, each of the microcomputers 11 and 12 performs the inversion control of the inverted two-wheeled vehicle 1 while restricting at least one of the speed and the posture angle, and thereby reduces the torque necessary for maintaining the inverted state. By doing so, each of the microcomputers 11 and 12 ensures the control stability of the inverted two-wheeled vehicle 1. Processes for these operations are described hereinafter.

Next, processes performed by the control apparatus 10 according to the third exemplary embodiment of the present invention are explained. Note that when the processes performed by the control apparatus 10 according to the third exemplary embodiment are compared with those performed by the control apparatus 10 according to the first exemplary embodiment, which are explained above with reference to Fig. 5, the factor(s) checked in the step S2 is different from that in the first exemplary embodiment. That is, in the third exemplary embodiment, as the factor that could increase the risk of a torque shortage under the condition of the single system, the temperatures of the batteries 15 and 16 are checked. Further, in the third exemplary embodiment, the upper limit value(s) for restricting the item(s) to be controlled of the inverted two-wheeled vehicle 1 is determined according to the temperatures of the batteries 15 and 16. Explanations of the other processes, which are similar to those of the first exemplary embodiment, are omitted.

The following explanation is given on the assumption that the 1st-control system has been disabled as in the case of the explanation of the first exemplary embodiment. Needless to say, processes similar to the below-described processes can be performed by the microcomputer 11 when the 2nd-control system is disabled.

In this case, in the third exemplary embodiment, the microcomputer 12 determines whether the temperature of the battery 16 is lower than a predetermined threshold (temperature) or not based on an temperature signal output from the temperature sensor 38 (S2). That is, the microcomputer 12 determines whether the temperature indicated by the temperature signal is lower than the predetermined threshold (temperature) or not. Then, when the microcomputer 12 determines that the temperature of the battery 16 is lower than the predetermined threshold, the microcomputer 12 determines that a problem is found in the checking process (S3: No). On the other hand, when the microcomputer 12 determines that the the temperature of the battery 16 is equal to or higher than the predetermined threshold, the microcomputer 12 determines that no problem is found in the checking process (S3: Yes).

When the microcomputer 12 determines that there is a problem in the checking process in the step S2 (S3: No), the microcomputer 12 restricts the operation of the inverted two-wheeled vehicle 1 by using at least one of the above-described operation restraint methods (1) and (2) so that the torque necessary for maintaining the inverted state is reduced (S4). However, in the second exemplary embodiment, the upper limit value for the speed or the posture angle of the inverted two-wheeled vehicle 1 is determined according to the temperature indicated by the temperature signal.

That is, in the Restriction method (1), the microcomputer 12 determines the upper limit value for the speed of the inverted two-wheeled vehicle 1 according to the temperature indicated by the temperature signal so that no shortage of the torque for driving the wheels 2 occurs. Note that as described previously, the the torque that can be provided to the wheels 2 decreases as the temperature indicated by the temperature signal decreases. However, the torque necessary for the inversion control can be reduced by lowering the speed of the inverted two-wheeled vehicle 1. Therefore, the microcomputer 12 determines the upper limit value for the speed in such a manner that the upper limit value decreases as the temperature of the battery 16 decreases. Note that the upper limit value for the speed of the inverted two-wheeled vehicle 1, which is determined according to the temperature of the battery 16, may be determined by, for example, the following manner: information representing a table that can make it possible to determine an upper limit value for the speed suitable for a temperature of the battery 16 based on the temperature of the battery 16, a calculating formula that can make it possible to calculate an upper limit value for the speed suitable for a temperature of the battery 16 based on the temperature of the battery 16, or the like is stored into a storage unit of each of the microcomputer 12 in advance; and then the CPU of the microcomputer 12 refers to that information. Then, the microcomputer 12 performs the inversion control of the inverted two-wheeled vehicle 1 so that the speed of the inverted two-wheeled vehicle 1 becomes equal to or lower than the determined upper limit value.

Further, in the Restriction method (2), the microcomputer 12 determines the upper limit value for the posture angle of the inverted two-wheeled vehicle 1 according to the temperature indicated by the temperature signal so that no shortage of the torque necessary for driving the wheels 2 occurs. Note that as described previously, the the torque that can be provided to the wheels 2 decreases as the temperature indicated by the temperature signal decreases. However, the torque necessary for the inversion control can be reduced by lowering the posture angle of the inverted two-wheeled vehicle 1. Therefore, the microcomputer 12 determines the upper limit value for the posture angle in such a manner that the upper limit value decreases as the temperature of the battery 16 decreases. Note that the upper limit value for the posture angle of the inverted two-wheeled vehicle 1, which is determined according to the temperature of the battery 16, may be determined by, for example, the following manner: information representing a table that can make it possible to determine an upper limit value for the posture angle suitable for a temperature of the battery 16 based on the temperature of the battery 38, a calculating formula that can make it possible to calculate an upper limit value for the posture angle suitable for a temperature of the battery 16 based on the temperature of the battery 16, or the like is stored into a storage unit of each of the microcomputer 12 in advance; and then the CPU of the microcomputer 12 refers to that information. Then, the microcomputer 12 performs the inversion control of the inverted two-wheeled vehicle 1 so that the posture angle of the inverted two-wheeled vehicle 1 becomes equal to or lower than the determined upper limit value.

By restricting the item to be controlled of the inverted two-wheeled vehicle 1 as described above, even when the inverted two-wheeled vehicle is in the single system mode and the temperature of the battery 16 is low, it is possible to perform control while preventing the occurrence of a torque shortage and thereby ensuring the stability under the control of the non-disabled control system alone. For example, even when the inverted two-wheeled vehicle 1 is traveling in a single system mode under a low temperature environment and a brake is suddenly applied, the inverted two-wheeled vehicle 1 can be stably stopped.

As explained above, in the third exemplary embodiment, the inverted two-wheeled vehicle 1 detects the temperature of the battery 16 by using the temperature sensor. Then, when the detected temperature is lower than a predetermined threshold, the inverted two-wheeled vehicle 1 determines that there is a possibility that a shortage of the torque for driving the wheels 2 could occur. Therefore, the inverted two-wheeled vehicle 1 performs the inversion control of the inverted two-wheeled vehicle 1 so that at least one of the speed and the posture angle of the inverted two-wheeled vehicle 1 is restricted. As a result, the inverted two-wheeled vehicle 1 can reduce the torque necessary for driving the wheels 2 even when the temperature of the battery 16 is low, thus making it possible to solve the torque shortage problem. Therefore, it is possible to improve the control stability of the inverted two-wheeled vehicle 1.

Note that the present invention is not limited to the above-described exemplary embodiments, and various modifications can be made as appropriate without departing from the spirit of the present invention.

In the above-described exemplary embodiments, example cases where the control systems are dual-redundant systems are shown. However, the number of control systems that are made redundant with respect to each other is not limited to two. For example, three or more control systems may be made redundant with respect to each other. In such cases, when it is detected that at least one of the redundant control systems is disabled, the microcomputers of the remaining control systems may restrict the speed or the posture angle of the inverted two-wheeled vehicle as described above.

Further, in the above-described exemplary embodiments, example cases where the inverted vehicle to be controlled is an inverted two-wheeled vehicle with two wheels are shown. However, the inverted vehicle is not limited to the inverted two-wheeled vehicle with two wheels. For example, the present invention may be applied to an inverted vehicle with one wheel or an inverted vehicle with three or more wheels.

Further, in the above-described exemplary embodiments, example cases in which when switching to control in which one of the control systems is disabled is detected and then, by detecting a predetermined factor(s) by using a sensor(s), it is determined that there is a possibility that a shortage of the torque for driving the wheels could occur based on the detected factor(s), the inverted two-wheeled vehicle is controlled so that the speed or the posture angle of the inverted two-wheeled vehicle is restricted are shown. However, the present invention is not limited to such cases. For example, the inverted two-wheeled vehicle is controlled so that the speed or the posture angle of the inverted two-wheeled vehicle is restricted when switching to control in which one of the control systems is disabled is detected. Even in this configuration, it is possible to prevent, as a whole, a torque shortage that would otherwise be caused due to the disabling of the control system. Note that in this case, the upper limit value for the speed or the posture angle of the inverted two-wheeled vehicle may be set to a predetermined speed or a predetermined posture angle.

Further, at least two of the above-described first to third exemplary embodiments may be combined and implemented at the same time. In such cases, the operation of the inverted two-wheeled vehicle may be restricted when it is determined that there is a problem in all of the detection factors (at least two of the load, the inclination angle, and the temperature) of the combined exemplary embodiments. Alternatively, the operation of the inverted two-wheeled vehicle may be restricted when it is determined that there is a problem in at least one of the detection factors of the combined exemplary embodiments.

**Reference Signs List**

1 INVERTED TWO-WHEELED VEHICLE
10 CONTROL APPARATUS
11,12 MICROCOMPUTER
13, 14 DCDC
15, 16 BATTERY
17, 18, 19, 20 INVERTER
21, 22, 23, 24 RELAY
25, 26 MOTOR
27, 28, 29, 30 ROTATION ANGLES SENSOR
31,32 POSTURE ANGLE SENSOR
33, 34 LOAD SENSOR
35, 36 INCLINATION ANGLE SENSOR
37, 38 TEMPERATURE SENSOR
251,252,261,262 COIL

**Claims**

1. An inverted vehicle that comprises a plurality of multiplexed control systems, and performs inversion control and thereby moves by providing torque to a wheel and thereby driving the wheel by using the plurality of control systems, wherein the control systems comprise:

a switching detection unit that detects switching to inversion control in which at least one of the plurality of control systems is disabled; and

an inversion control unit that performs inversion control of the inverted vehicle while restricting at least one of a speed and a posture angle of the inverted vehicle when the switching of the inversion control is detected by the switching detection unit.

2. The inverted vehicle according to Claim 1, further comprising a sensor that detects a predetermined factor that could affect an increase of torque necessary for driving the wheel or a decrease of torque that can be provided to the wheel, wherein

when the switching of the inversion control is detected by the switching detection unit, the inversion control unit determines whether or not there is a possibility that a shortage of torque for driving the wheel could occur based on the detection by the sensor, and

when the inversion control unit determines that there is a possibility that a shortage of the torque for driving the wheel could occur, the inversion control unit performs inversion control of the inverted vehicle so that at least one of a speed and a posture angle of the inverted vehicle is restricted.

3. The inverted vehicle according to Claim 2, wherein
the sensor is a load sensor that detects a load exerted from a rider riding on the inverted vehicle, and
the inversion control unit determines that there is a possibility that a shortage of the torque for driving the wheel could occur when the load detected by the load sensor is larger than a predetermined threshold.

4. The inverted vehicle according to Claim 2 or 3, wherein
the sensor is an inclination angle sensor that detects an inclination angle of a surface on which the inverted vehicle is moving, and
the inversion control unit determines that there is a possibility that a shortage of the torque for driving the wheel could occur when the inclination angle detected by the inclination angle sensor is larger than a predetermined threshold.

5. The inverted vehicle according to any one of Claims 2 to 4, wherein
the sensor is a temperature sensor that detects a temperature of a battery that is mounted on the inverted vehicle and supplies electric power for driving the wheel, and
the inversion control unit determines that there is a possibility that a shortage of the torque for driving the wheel could occur when the temperature detected by the temperature sensor is lower than a predetermined threshold.

6. The inverted vehicle according to any one of Claims 2 to 5, wherein the inversion control unit determines an upper limit for restricting at least one of a speed and a posture angle of the inverted vehicle according to the detection by the sensor.

7. The inverted vehicle according to any one of Claims 1 to 6, wherein
the plurality of control systems are two control systems that are redundant with respect to each other, and
the switching detection unit detects switching to the inversion control in which either one of the redundant control systems is disabled.

8. The inverted vehicle according to any one of Claims 1 to 7, wherein the inverted vehicle is an inverted two-wheeled vehicle with two wheels.

9. The inverted vehicle according to any one of Claims 1 to 8, wherein
the inverted vehicle drives the wheel by supplying a drive current to a motor by the plurality of control systems, the motor being configured to provide torque to the wheel, and
the inversion control unit cuts off the supply of the drive current from its own control system to the motor when the inversion control unit disables its own control system in response to detection of an abnormality in the own control system.

10. A control method for performing inversion control of an inverted vehicle and thereby moving the inverted vehicle by providing torque to a wheel and thereby driving the wheel by using a plurality of multiplexed control systems, comprising:

a switching detection step of detecting switching to inversion control in which at least one of the plurality of control systems is disabled; and
an inversion control step of performing inversion control of the inverted vehicle while restricting at least one of a speed and a posture angle of the inverted vehicle when the switching of the inversion control is detected.

Fig. 1

# Fig. 2

2

**1st-SYSTEM**

- DCDC (13)
- BATTERY (15)
- INVERTER (17)
- INVERTER (18)
- RELAY (21)
- RELAY (22)
- MICROCOMPUTER (11)
- POSTURE ANGLES SENSOR (31)
- LOAD SENSOR (33)
- LEFT MOTOR DOUBLE-WINDING (25)
- ROTATION ANGLES SENSOR (27)
- ROTATION ANGLES SENSOR (28)

**2nd-SYSTEM**

- DCDC (14)
- BATTERY (16)
- INVERTER (19)
- INVERTER (20)
- RELAY (23)
- RELAY (24)
- MICROCOMPUTER (12)
- POSTURE ANGLES SENSOR (32)
- LOAD SENSOR (34)
- RIGHT MOTOR DOUBLE-WINDING (26)
- ROTATION ANGLES SENSOR (29)
- ROTATION ANGLES SENSOR (30)

Fig. 3

θ

v

u(t)

Fig. 4

START

S1

REDUNDANT MODE ?

YES

NO

S2

CHECK FACTOR THAT COULD INCREASE RISK OF TORQUE SHORTAGE UNDER SINGLE SYSTEM CONTROL

S3

IS NO PROBLEM FOUND IN CHECKING ?

YES

S5

NO ITEM TO BE CONTROLLED IS RESTRICTED

NO

S4

RESTRICT ITEM TO BE CONTROLLED

END

Fig. 5

Fig. 6

2

**1st-SYSTEM**

- DCDC (13)
- BATTERY (15)
- INVERTER (17)
- INVERTER (18)
- RELAY (21)
- RELAY (22)
- MICROCOMPUTER (11)
- POSTURE ANGLES SENSOR (31)
- INCLINATION ANGLE SENSOR (35)
- ROTATION ANGLES SENSOR (27)
- ROTATION ANGLES SENSOR (28)

**2nd-SYSTEM**

- DCDC (14)
- BATTERY (16)
- INVERTER (19)
- INVERTER (20)
- RELAY (23)
- RELAY (24)
- MICROCOMPUTER (12)
- POSTURE ANGLES SENSOR (32)
- INCLINATION ANGLE SENSOR (36)
- ROTATION ANGLES SENSOR (29)
- ROTATION ANGLES SENSOR (30)

LEFT MOTOR DOUBLE-WINDING (25)

RIGHT MOTOR DOUBLE-WINDING (26)

Fig. 7

2

1st-SYSTEM

13  DCDC  ←  15  BATTERY

31  POSTURE ANGLES SENSOR
37
TEMPERATURE SENSOR
→  11  MICROCOMPUTER  →  17  INVERTER  →  21  RELAY
18  INVERTER  →  22  RELAY

25  LEFT MOTOR DOUBLE-WINDING

27  ROTATION ANGLES SENSOR
28  ROTATION ANGLES SENSOR

2nd-SYSTEM

14  DCDC  ←  16  BATTERY

32  POSTURE ANGLES SENSOR
38
TEMPERATURE SENSOR
→  12  MICROCOMPUTER  →  19  INVERTER  →  23  RELAY
20  INVERTER  →  24  RELAY

26  RIGHT MOTOR DOUBLE-WINDING

29  ROTATION ANGLES SENSOR
30  ROTATION ANGLES SENSOR

EP 2 891 596 A1

## INTERNATIONAL SEARCH REPORT

| International application No. |
|---|
| PCT/JP2012/005504 |

| A. CLASSIFICATION OF SUBJECT MATTER |
|---|
| *B62K17/00*(2006.01)i, *B62K3/00*(2006.01)i |

According to International Patent Classification (IPC) or to both national classification and IPC

| B. FIELDS SEARCHED |
|---|

Minimum documentation searched (classification system followed by classification symbols)
B62K17/00, B62K3/00

Documentation searched other than minimum documentation to the extent that such documents are included in the fields searched
Jitsuyo Shinan Koho        1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2007-62682 A  (Toyota Motor Corp.),<br>15 March 2007 (15.03.2007),<br>entire text; fig. 1 to 6<br>& EP 1759972 A2        & US 2007/052377 A1<br>& CN 1923600 A | 1-10 |
| A | JP 2012-20739 A  (Toyota Motor Corp.),<br>02 February 2012 (02.02.2012),<br>entire text; fig. 1 to 6<br>(Family: none) | 1-10 |

☒ Further documents are listed in the continuation of Box C.        ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>13 November, 2012 (13.11.12) | Date of mailing of the international search report<br>20 November, 2012 (20.11.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2012/005504 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-510637 A  (Deka Products Ltd. Partnership),<br>08 April 2004 (08.04.2004),<br>entire text; fig. 1 to 14<br>& WO 2002/030730 A2      & EP 1324911 A2<br>& TW 515770 B            & NZ 525279 A<br>& MX PA03003266 A        & CA 2425148 A1<br>& AU 1190802 A | 1-10 |

Form PCT/ISA/210 (continuation of second sheet) (July 2009)

**EP 2 891 596 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004510637 PCT
- JP 2003502002 PCT